(19) Europäisches Patentamt
European Patent Office
Office européen des brevets

(11) Veröffentlichungsnummer: **0 231 762**
**A2**

(12) # EUROPÄISCHE PATENTANMELDUNG

(21) Anmeldenummer: **87100226.7**

(22) Anmeldetag: **09.01.87**

(51) Int.Cl.³: **C 02 F 3/28**
C 02 F 5/00

(30) Priorität: **21.01.86 DE 3601552**

(43) Veröffentlichungstag der Anmeldung:
**12.08.87 Patentblatt 87/33**

(84) Benannte Vertragsstaaten:
**AT BE DE FR GB IT NL SE**

(71) Anmelder: **Passavant-Werke AG & Co. KG**

**D-6209 Aarbergen 7(DE)**

(72) Erfinder: **Klegraf, Ferdinand, Dipl.-Ing.**
**Langegärten 13**
**D-6229 Rauenthal(DE)**

(54) **Verfahren zum Entfernen von bei anaerober Behandlung von organisch belasteten Abwässern entstehendem Kalziumkarbonat.**

(57) Es wird ein verfahren zum entfernen des bei der anaeroben behandlung von kalziumionenhaltigen abwaessern anfallenden kalziumkarbonats vorgeschlagen, das dadurch gekennzeichnet ist, dass man das ausgefaellte kalziumkarbonat durch zufuhr von kohlensaeurehaltigem gas und loesewasser rueckloest und mit dem gereinigtem abwasser abgefuehrt. Vorzugsweise erfolgt die rueckloesung in einer separaten, der anaerobstufe nachgeschalteten gaswaschstufe, die von der schlamm-wasser-suspension durchlaufen wird. Die trennung von rueckzufuehrenden, anaerobem schlamm und kalziumhydrogenkarbonathaltigem wasser wird in einer nachfolgenden trennstufe vorgenommen.

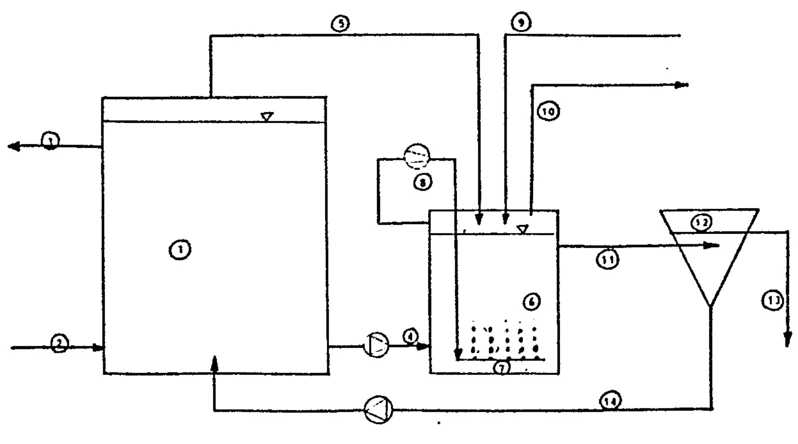

EP 0 231 762 A2

P 1298

BESCHREIBUNG

DIE ERFINDUNG BETRIFFT EIN VERFAHREN ZUM ENTFERNEN VON BEI ANAEROBER BEHANDLUNG VON ORGANISCH BELASTETEN, FREIE KALZIUM-IONEN ENTHALTENDEN ABWAESSERN ENTSTEHENDEM UNGELOESTEM KALZIUMKARBONAT.

BEI ANAEROBEN, BIOLOGISCHEN PROZESSEN WERDEN ORGANISCHE SUBSTANZEN VORNEHMLICH IN METHAN- UND KOHLENSAEURE ZERSETZT. WAEHREND METHAN IN WASSER WENIG, SO IST KOHLENSAEURE IN WASSER ERHEBLICH LOESLICH.

SIND GLEICHZEITIG IM WASSER ERDALKALI-IONEN, INSBESONDERE KALZIUM-IONEN,GELOEST, SO FUEHRT DIESES ZUR BILDUNG VON LOESLICHEN HYDROGENKARBONATEN.

$$CA^{2+} + 2HCO_3^- \overset{\longrightarrow}{\longrightarrow} CA(HCO_3)_2$$

KALZIUMHYDROGENKARBONAT IST JEDOCH NUR BEGRENZT IN WASSER LOESLICH;BEI UEBERSCHREITEN DER LOESLICHKEITSGRENZE WIRD KALZIUMKARBONAT AUSFALLEN.

$$CA(HCO_3)_2 \longrightarrow CACO_3\downarrow + CO_2 + H_2O$$

DAS GEFAELLTE KALZIUMKARBONAT WIRD IM BIOREAKTOR ZURUECKGEHALTEN, WEIL ANAROBE REAKTOREN IN HOHEM MASSE AUF EINE GUTE SCHLAMMRUECKHALTUNG AUSGELEGT SIND.

BEI EINER ANREICHERUNG VON KALZIUMKARBONAT IM ANAEROBEN BELEBTSCHLAMM KOMMT ES ZUR BILDUNG VON SCHWEREN SCHLAEMMEN, DEREN DISPERGIERUNG IM REAKTOR PROBLEMATISCH IST, SO DASS ES ZU UNERWUENSCHTEN ABSETZUNGEN KOMMT, DIE LETZTLICH DEN GESAMTEN REAKTOR INAKTIVIEREN KOENNEN.

ZUR ABHILFE WURDE BEREITS VORGESCHLAGEN (DE-OS 33 27 032 UND DE-OS 33 27 033), DIE SCHLAMM-WASSER-SUSPENSION IM REAKTOR SO ZU RUEHREN, DASS SICH DIE SCHWEREN KALZIUMKARBONATHALTIGEN INERTSTOFFE IN BEHAELTERBODENMITTE SAMMELN, VON WO SIE ABGEZOGEN WERDEN KOENNEN. DIES IST EINE REIN MECHANISCHE ABTRENNUNG, DIE JEDOCH NUR DANN ANWENDBAR IST, WENN DAS KALZIUMKARBONAT IN REINER FORM UND GETRENNT VON DEN ANAEROBSCHLAMMFLOCKEN ANFAELLT.

EINE CHEMISCHE ENTFERNUNG WIRD IN DER EU-OS 0 084 879 VORGESCHLAGEN. DORT SOLLEN DIE IM ABWASSER ENTHALTENEN KALZIUM-IONEN SCHON VOR DER ANAEROBEN PROZESSSTUFE AUSGEFAELLT UND DURCH SEDIMENTATION ABGETRENNT WERDEN. ALS FAELLUNGSMITTEL WIRD KOHLENSAEUREHALTIGES GAS VERWENDET. BEI DIESER VORFAELLUNG WIRD DEM ABWASSER KOHLENSAEURE ENTZOGEN, SO DASS DAS GLEICHGEWICHT GESTOERT WIRD.

DIE AUFGABE, DIE GESCHILDERTEN NACHTEILE ZU BESEITIGEN, WIRD GEMAESS DER VORLIEGENDEN ERFINDUNG DADURCH GELOEST, DASS MAN DAS KALZIUMKARBONAT DURCH ZUFUHR VON KOHLENSAEUREHALTIGEM GAS UND LOESEWASSER RUECKLOEST UND MIT DEM GEKLAERTEN WASSER ABFUEHRT. VORZUGSWEISE NIMMT MAN ALS KOHLENSAEUREHALTIGES GAS DAS AUS DER ANAEROBEN PROZESSSTUFE SELBER STAMMENDE BIOGAS. DIE UMSETZUNG DES KALZIUMKARBONATS ERFOLGT NACH FOLGENDER REAKTIONSGLEICHUNG:

$$CACO_3 \downarrow + CO_2 + H_2O \dashrightarrow CA(HCO_3)_2.$$

HIERBEI WIRD ERREICHT, DASS ZUM EINEN DEM ANAEROBEN SCHLAMM DAS KALZIUMKARBONAT UND DEM BIOGAS KOHLENSAEURE ENTZOGEN WIRD. DEM BIOGAS KANN VOR EINLEITUNG IN DIE LOESESTUFE EIN TEIL DER KOHLENSAEURE ENTZOGEN WERDEN.

ES IST BESONDERS VORTEILHAFT, WENN MAN DER ANAEROBEN PROZESSSTUFE SCHLAMM-WASSER-SUSPENSION ENTZIEHT UND IN EINER SEPARATEN GASWASCHSTUFE MIT KOHLENSAEUREHALTIGEM GAS UND LOESEWASSER BEHANDELT UND DIE SO BEHANDELTE SUSPENSION IN EINER NACHGESCHALTETEN TRENNSTUFE IN RUECKZUFUEHRENDEN SCHLAMM UND DAS RUECKGELOESTE KALZIUMHYDROGENKARBONAT ENTHALTENDES WASSER AUFTEILT. DABEI WIRD AUS DER ANAEROBEN PROZESSSTUFE UEBERHAUPT KEIN WASSER MEHR ABGEZOGEN, SO DASS DIESE STUFE ALS VOLLSTAENDIG DURCHMISCHTER REAKTOR BETRIEBEN WERDEN KANN.

DIE ERFINDUNG WIRD ANHAND DES IN DER ANLAGE BEIGEFUEGTEN VERFAHRENSSCHEMAS NOCH GENAUER ERLAEUTERT.

DER ANAEROBEN PROZESSSTUFE (1) WIRD DAS ZU BEHANDELNDE ABWASSER BEI (2) ZUGEFUEHRT, DAS VERFAHRENSPRINZIP DER ANAEROBEN STUFE IST FUER DAS BESCHRIEBENE VERFAHREN NICHT VON BEDEUTUNG,

DAS BIOGAS WIRD BEI (5) ABGEZOGEN UND EINEM GASWAESCHER (6) ZUGEFUEHRT. DER GASWAESCHER (6) IST ALS GESCHLOSSENER BEHAELTER AUSGEFUEHRT, UND MIT EINEM BEGASUNGSSYSTEM (7), ANGEORDNET VORNEHMLICH AM BEHAELTERBODEN, AUSGERUESTET.

DIE BEGASUNG DES BEHAELTERINHALTES IM GASWAESCHER ERFOLGT UEBER EINE INTERE BIOGAS-REZIRKULATION (8).

GLEICHZEITIG WIRD DEM GASWAESCHER (6) BETRIEBSWASSER (9) ALS LOESEWASSER FUER KALZIUMHYDROGENKARBONAT ZUGEFUEHRT. DAS BEHANDELTE KOHLENSAEUREARME BIOGAS WIRD BEI (10) ABGELEITET.

DIE KALZIUMDYDROGENKARBONATHALTIGE BELEBTSCHLAMMSUSPENSION (11)WIRD ZUR FEST-FLUESSIG-SEPARATION EINEM KLAERBECKEN (12) ZUGELEITET. DIE SEPARATION ERFOLGT HIER DURCH SEDIMENTATION.

DAS VOM BELEBTSCHLAMM BEFREITE KALZIUMHYDROGENKARBONATHALTIGE WASSER WIRD BEI (13) ABGELEITET.

DER SEPARATE BELEBTSCHLAMM (14) WIRD ZUR ANAEROBEN PROZESSSTUFE (1) REZIRKULIERT.

0231762

P 1298

PASSAVANT - WERKE
AG & CO. KG

6209 AARBERGEN 7

BEZEICHNUNG

VERFAHREN ZUM ENTFERNEN VON BEI ANAEROBER BEHANDLUNG VON ORGANISCH BELASTETEN ABWAESSERN ENTSTEHENDEM KALZIUMKARBONAT

PATENTANSPRUECHE

1. VERFAHREN ZUM ENTFERNEN VON BEI ANAEROBER BEHANDLUNG VON ORGANISCH BELASTETEN ABWAESSERN ENTSTEHENDEM KALZIUMKARBONAT, D A D U R C H G E K E N N Z E I C H N E T, DASS ZUR RUECKLOESUNG DES KALZIUMKARBONATS IN KALZIUMHYDROGENKARBONAT KOHLENSAEUREHALTIGE GASE UND LOESEWASSER ZUGEFUEHRT UND DAS GELOESTE KALZIUMHYDROGENKARBONAT MIT DEM GEKLAERTEN WASSER ABGEFUEHRT WIRD.

2. VERFAHREN NACH ANSPRUCH 1, DASS DAS KOHLENSAEUREHALTIGE GAS AUS DEM ANAEROBEN ABBAUPROZESS SELBER STAMMT.

3. VERFAHREN NACH ANSPRUCH 2, D A D U R C H G E K E N N Z E I C H N E T, DASS DER KOHLENSAEUREGEHALT DES PROZESSEIGENEN BIOGASES REDUZIERT IST.

4. VERFAHREN NACH ANSPRUCH 1, 2 ODER 3, D A D U R C H G E K E N N Z E I C H N E T, DASS MAN DER ANAEROBEN PROZESSSTUFE MIT DEM KALZIUMKARBONAT ANGEREICHERTE SCHLAMM-WASSER-SUSPENSION ENTZIEHT UND IN EINER SEPARATEN GASWASCHSTUFE BEHANDELT, DER AUCH DAS LOESEWASSER ZUGEFUEHRT WIRD, UND DASS MAN DIE SUSPENSION IN EINER NACHGESCHALTETEN TRENNSTUFE IN RUECKZUFUEHRENDEN SCHLAMM UND DAS RUECKGELOESTE KALZIUMHYDROGENKARBONAT ENTHALTENDES WASSER AUFTEILT.

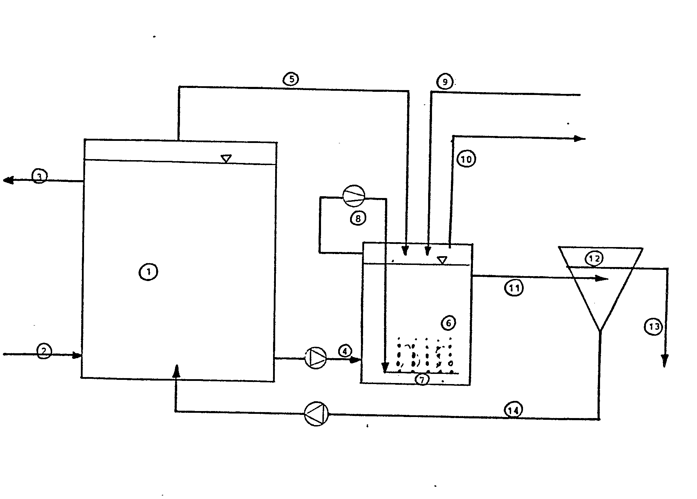

5. VERFAHREN NACH ANSPRUCH 4, D A D U R C H G E K E N N Z E I C H N E T, DASS DIE GESAMTE SCHLAMM-WASSER-SUSPENSION AUS DER ANAEROBEN PROZESSSTUFE ABGEZOGEN WIRD UND BEHANDELTES WASSER NUR DER DER GASWASCHSTUFE NACHGESCHALTETEN TRENNSTUFE ENTNOMMEN WIRD.

0231762
P 1298

1/1